# EUROPEAN PATENT APPLICATION

(11) **EP 4 761 043 A1**
(43) Date of publication of application: **17.06.2026**
(21) Application number: 25745444.7
(22) Date of filing: 14.01.2025
(51) Int. Cl.: H02J 7/00, H01M 10/42

(54) **BATTERY MANAGEMENT APPARATUS AND OPERATION METHOD THEREFOR**

(30) Priority: 22.01.2024 KR 20240009668
(71) Applicant: LG Energy Solution, Ltd., Seoul 07335 (KR)
(72) Inventor: JEONG, Doo Ho, Daejeon 34122 (KR)
(74) Representative: Plasseraud IP
(86) International application number: PCT/KR2025/000766
(87) International publication number: WO 2025/159425

(57) **Abstract**

A battery management device according to an embodiment disclosed in this document may include an acquisition unit that acquires a voltage of each of a plurality of battery cells included in a battery unit, a switch connected to the battery unit and turned on or off in response to a control signal, a conversion unit that converts power of the battery unit into balancing power, and a controller that determines a cell balancing mode including an active balancing mode and a passive balancing mode and a balancing target cell based on the voltage of each of the plurality of battery cells, and manages the balancing target cell using the balancing power or power of the balancing target cell based on the determined cell balancing mode.

## Description

### CROSS-REFERENCE TO RELATED APPLICATION

The present application claims the benefit of the priority of Korean Patent Application No. 10-2024-0009668, filed on January 22, 2024, which is hereby incorporated by reference in its entirety.

### TECHNICAL FIELD

Embodiments disclosed in this document relate to a battery management device and an operating method thereof.

### BACKGROUND ART

Recently, research and development on secondary batteries have been actively conducted. Here, secondary batteries are batteries that can be charged and discharged, and may be interpreted as including both conventional Ni/Cd batteries, Ni/MH batteries, and recent lithium-ion batteries. Recently, the scope of use of the secondary batteries has expanded to include a power source for electric vehicles, and the secondary batteries are attracting attention as a next-generation energy storage medium.

Electric vehicles receive electricity from outside to charge battery cells/modules, then discharge the battery cells/modules to drive the motor and obtain power. The battery cells/modules undergo internal deformation and transformation through various charging and discharging during production and use stages, and their physical and chemical properties change. Due to such deterioration and degradation of the battery, a technology to manage the operation of the battery cells and modules is needed.

In addition, when battery cells are repeatedly charged and discharged, an imbalance between cell voltages may occur. Such voltage imbalance between battery cells may shorten the life of the battery and cause inefficient use of the battery cells, thereby reducing the energy efficiency of the battery. Therefore, there is a need for a technology for extending the life of the battery and enabling efficient use of the battery through cell balancing, which balances the voltage of each battery cell.

### DISCLOSURE OF THE INVENTION

### TECHNICAL PROBLEM

One objective of the embodiments disclosed in this document is to provide a battery management device capable of selectively performing active balancing and passive balancing, and an operating method thereof.

One objective of the embodiments disclosed in this document is to provide a battery management device capable of converting power of a battery unit into power used for active balancing and power supplied to one or more loads, and an operating method thereof.

The technical problems of the embodiments disclosed in this document are not limited to the technical problems mentioned above, and other technical problems not mentioned can be clearly understood by those skilled in the art from the descriptions below.

### TECHNICAL SOLUTION

A battery management device according to an embodiment disclosed in this document includes an acquisition unit that acquires a voltage of each of a plurality of battery cells included in a battery unit, a switch connected to the battery unit and turned on or off in response to a control signal, a conversion unit that converts power of the battery unit into balancing power, and a controller that determines a cell balancing mode including an active balancing mode and a passive balancing mode and a balancing target cell based on the voltage of each of the plurality of battery cells, and manages the balancing target cell using the balancing power or power of the balancing target cell based on the determined cell balancing mode.

According to an embodiment, the control signal may include a PWM signal.

According to an embodiment, the conversion unit may convert the power of the battery unit when the switch is turned on.

According to an embodiment, the conversion unit may include a first conversion unit that converts the power of the battery unit into the balancing power, and a second conversion unit that converts the power of the battery unit into reserve power.

According to an embodiment, each of the balancing power and the reserve power may be smaller than the power of the battery unit.

According to an embodiment, the reserve power may be supplied to an electronic device insulated from the battery unit.

According to an embodiment, the first conversion unit may include a primary winding L2 supplied with the power of the battery unit and a first secondary winding L1 magnetized with the primary winding, and the second conversion unit may include the primary winding L2 and a second secondary winding L3 magnetized with the primary winding.

According to an embodiment, the second secondary winding of the second conversion unit may be connected to an electronic device insulated from the battery unit.

According to an embodiment, the battery management device may further include a selection unit that makes conductive or cuts off at least one of an electrical connection between each of the plurality of battery cells and a balancing resistor and an electrical connection between each of the plurality of battery cells and the conversion unit, and the controller may control the selection unit based on the cell balancing mode and the balancing target cell to manage the balancing target cell.

According to an embodiment, the selection unit may include a plurality of passive resistors connected in parallel to each of the plurality of battery cells, a plurality of passive switches switching an electrical connection between each of the plurality of passive resistors and each of the plurality of battery cells, and a plurality of active switches connected between each of the plurality of battery cells and the conversion unit and switching application of the balancing power to each of the plurality of battery cells.

According to an embodiment, the controller, when the cell balancing mode is determined to be the active balancing mode, may short-circuit an active switch connected between the balancing target cell and the conversion unit among the plurality of active switches and open remaining active switches and remaining passive switches except for the short-circuited active switch among the active switches and the passive switches.

According to an embodiment, the controller, when the cell balancing mode is determined to be the passive balancing mode, may short-circuit a passive switch connected between the balancing target cell and the passive resistor among the plurality of passive switches and open remaining active switches and remaining passive switches except for the short-circuited passive switch among the active switches and the passive switches.

A battery management method according to an embodiment disclosed in this document may include acquiring a voltage of each of a plurality of battery cells included in a battery unit, controlling a turn-on or turn-off state of the switch by applying a control signal to a switch connected to the battery unit, converting power of the battery unit into balancing power through a conversion unit, determining a cell balancing mode including an active balancing mode and a passive balancing mode and a balancing target cell based on the voltage of each of the plurality of battery cells, and managing the balancing target cell using the balancing power or power of the balancing target cell based on the determined cell balancing mode.

According to an embodiment, the control signal may include a PWM signal.

According to an embodiment, in the converting, the power of the battery unit may be converted when the switch is turned on.

The conversion unit may include a first conversion unit and a second conversion unit, and the converting may include converting the power of the battery unit into the balancing power by the first conversion unit and converting the power of the battery unit into reserve power by the second conversion unit.

According to an embodiment, each of the balancing power and the reserve power may be smaller than the power of the battery unit.

According to an embodiment, the operating method may further include, after the converting, supplying the reserve power to an electronic device insulated from the battery unit.

According to an embodiment, the first conversion unit may include a primary winding L2 supplied with the power of the battery unit and a first secondary winding L1 magnetized with the primary winding, and the second conversion unit may include the primary winding L2 and a second secondary winding L3 magnetized with the primary winding.

According to an embodiment, the power of the battery unit may be simultaneously converted into the balancing power and the reserve power.

According to an embodiment, the managing of the balancing target cell may include controlling a selection unit that makes conductive or cuts off at least one of an electrical connection between each of the plurality of battery cells and a balancing resistor and an electrical connection between each of the plurality of battery cells and the conversion unit based on the cell balancing mode and the balancing target cell.

According to an embodiment, the selection unit may include a plurality of passive resistors connected in parallel to each of the plurality of battery cells, a plurality of passive switches switching an electrical connection between each of the plurality of passive resistors and each of the plurality of battery cells, and a plurality of active switches connected between each of the plurality of battery cells and the conversion unit and switching application of the balancing power to each of the plurality of battery cells.

According to an embodiment, the controlling of the selection unit, when the cell balancing mode is determined to be the active balancing mode, may include short-circuiting an active switch connected between the balancing target cell and the conversion unit among the plurality of active switches and opening remaining active switches and remaining passive switches except for the short-circuited active switch among the active switches and the passive switches.

According to an embodiment, the controlling of the selection unit, when the cell balancing mode is determined to be the passive balancing mode, may include short-circuiting a passive switch connected between the balancing target cell and the passive resistor among the plurality of passive switches and opening remaining active switches and remaining passive switches except for the short-circuited passive switch among the active switches and the passive switches.

### ADVANTAGEOUS EFFECTS

The battery management device and operating method thereof according to the embodiment disclosed in this document can selectively perform active balancing and passive balancing.

The battery management device and operating method thereof according to the embodiment disclosed in this document can convert power of the battery unit into power used for active balancing and power supplied to one or more loads.

In addition, various effects directly or indirectly identified through this document may be provided.

### BRIEF DESCRIPTION OF THE DRAWINGS

FIG. 1 is a diagram illustrating a battery pack according to an embodiment disclosed in this document.
FIG. 2 is a block diagram illustrating a battery management device according to an embodiment disclosed in this document.
FIG. 3 is a block diagram illustrating an operation of the battery management device according to an embodiment disclosed in this document.
FIG. 4 is a circuit diagram illustrating an operation of the battery management device according to an embodiment disclosed in this document.
FIG. 5 is a circuit diagram illustrating a conversion unit according to an embodiment disclosed in this document.
FIG. 6 is a circuit diagram illustrating a conversion unit according to an embodiment disclosed in this document.
FIG. 7 is a circuit diagram illustrating an operation of a cell balancing unit in an active balancing mode according to an embodiment disclosed in this document.
FIG. 8 is a circuit diagram illustrating an operation of a cell balancing unit in a passive balancing mode according to an embodiment disclosed in this document.
FIG. 9 is a circuit diagram illustrating a selection unit according to an embodiment disclosed in this document.
FIG. 10 is a flowchart illustrating an operation of a battery management device according to an embodiment disclosed in this document.
FIG. 11 is a block diagram illustrating a hardware configuration of a computing system for performing an operating method of a battery management device according to an embodiment disclosed in this document.

### MODE FOR CARRYING OUT THE INVENTION

Hereinafter, various embodiments of the present invention are described with reference to the accompanying drawings. However, this is not intended to limit the present invention to a specific embodiment, but should be understood to include various modifications, equivalents, and/or alternatives of the embodiments of the present invention.

Embodiments of this document and the terms used therein are not intended to limit the technical features described in this document to specific embodiments, but should be understood to include various modifications, equivalents, or alternatives of the corresponding embodiment. In connection with the description of the drawings, similar reference numerals may be used for similar or related components. The singular form of a noun corresponding to an item may include one or more of said items, unless the context clearly indicates otherwise.

In this document, each of phrases "A or B", "at least one of A and B", "at least one of A or B", "A, B, or C", "at least one of A, B, and C", and "at least one of A, B, or C" may include any one of the items listed together in that phrase, or all possible combinations thereof. Terms such as "first", "second", "firstly", "secondly", "A", "B", "(a)", or "(b)" may be used merely to distinguish one component from another, and do not limit the components in any other respect (e.g., importance or order) unless specifically stated otherwise.

In this document, when a component (e.g., a first component) is referred to as being "connected", "coupled" or "joined" to another component (e.g., a second component), with or without the terms "functionally" or "communicatively", it means that the component may be connected to the other component directly (e.g., in a wired manner or wirelessly), or indirectly (through a third component).

According to an embodiment, a method according to various embodiments disclosed in this document may be provided by being included in a computer program product. The computer program product may be traded between a seller and a buyer as a product. The computer program product may be distributed in the form of a machine-readable storage medium (e.g., compact disc read only memory (CD-ROM)), or may be distributed online (e.g., downloaded or uploaded) through an application store or directly between two user devices. In the case of online distribution, at least a part of the computer program product may be temporarily stored or temporarily generated in a machine-readable storage medium such as a memory of a manufacturer's server, an application store's server, a relay server.

According to various embodiments, each of the components (e.g., modules or programs) described above may include a single or plurality of entities, and some of the plurality of entities may be separated and placed in other components. According to various embodiments, one or more of the components or operations described above may be omitted, or one or more other components or operations may be added. Alternatively or additionally, a plurality of components (e.g., modules or programs) may be integrated into a single component. In such a case, the integrated component may perform one or more functions of each of the plurality of components identically or similarly to those performed by the corresponding component among the plurality of components prior to the integration. According to various embodiments, the operations performed by a module, program, or other component may be performed sequentially, in parallel, repeatedly, or heuristically, or one or more of the operations may be performed in a different order, omitted, or performed by being added with one or more other operations.

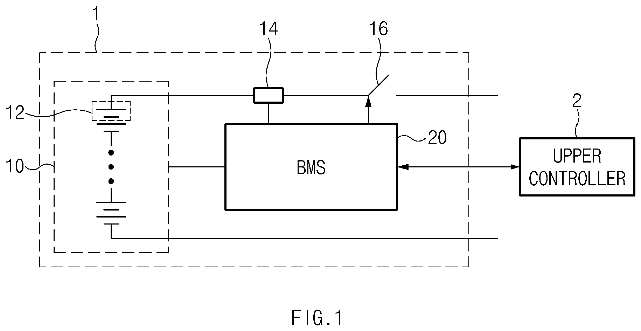

FIG. 1 is a diagram illustrating a battery pack according to an embodiment disclosed in this document. FIG. 1 schematically illustrates a battery control system including a battery pack 1 and an upper controller 2 included in an upper system.

Referring to FIG. 1, the battery pack 1 may include a battery unit 10, a sensor unit 14, a switching unit 16, and a battery management system (BMS) 20. In this case, the battery pack 1 may be equipped with a plurality of battery units 10, sensor units 14, switching units 16, and battery management systems 20.

According to the embodiment, the battery unit 10 may supply power to a target device (not illustrated). To this end, the battery unit 10 may be electrically connected to a target device. Here, the target device may include an electrical, electronic, or mechanical device that operates by receiving power from the battery pack 1. For example, the target device may be an electric vehicle (EV) or an energy storage system (ESS), but is not limited thereto.

According to the embodiment, the battery unit 10 may include at least one battery cell 12 capable of being charged and discharged. Here, the battery cell 12 may be a basic unit of a battery cell that can be used by being charged and discharged with electric energy. For example, the battery cell 12 may be a lithium-ion (Li-ion) battery, a lithium-ion polymer (Li-ion polymer) battery, a nickel-cadmium (Ni-Cd) battery, a nickel hydride (Ni-MH) battery, etc., but is not limited thereto.

According to the embodiment, a plurality of battery units 10 may be connected in series or in parallel. For example, the battery unit 10 may be a battery module, a battery bank, or a battery pack (cell-to-pack structure).

According to the embodiment, the sensor unit 14 may acquire information related to the battery unit 10. According to an embodiment, the sensor unit 14 may acquire values (or information) related to a state of each battery unit 10. In an embodiment, values related to the state may include one or more values for voltage, current, resistance, state of charge (SOC), state of health (SOH), temperature of the battery cell, or a combination thereof.

According to the embodiment, the sensor unit 14 may provide information on each of the plurality of battery units 10 to the battery management system 20.

According to the embodiment, the switching unit 16 may include a device for controlling a current flow for charging or discharging the battery unit 10. For example, the switching unit 16 may be composed of at least one relay and/or magnetic contactor, etc., depending on the specifications of the battery pack 1.

According to the embodiment, the battery management system (BMS) 20 may control or manage the battery pack 1 to prevent overcharge and overdischarge, etc. by monitoring the voltage, current, temperature, etc. of the battery pack 1. For example, the battery management system 20 may include a plurality of terminals and a circuit that is connected to these terminals and processes input values as an interface for receiving values obtained by measuring the various parameters described above. In addition, the battery management system 20 may control the sensor unit 14 and/or the switching unit 16. For example, the battery management system 20 may be connected to the plurality of battery units 10 to monitor a state of each of the plurality of battery units 10 and control ON/OFF of a relay or a contactor, etc.

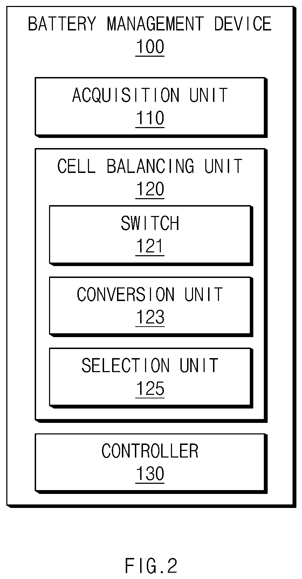

According to the embodiment, the battery management system 20 may include a battery management device 100 of FIG. 2. According to another embodiment, the battery management system 20 may be a different system than the battery management device 100 of FIG. 2. That is, the battery management device 100 of FIG. 2 may be included in the battery pack 1 or may be configured as another device outside the battery pack 1. In addition, the operation of the battery management device 100 below may be performed by the battery management system (BMS) in a vehicle, as well as by various devices such as a server, a cloud, a charger, or a charger/discharger.

The upper controller 2 may transmit a control signal for the plurality of battery units 10 to the battery management system 20. Accordingly, the battery management system 20 may be controlled based on a signal applied from the upper controller 2.

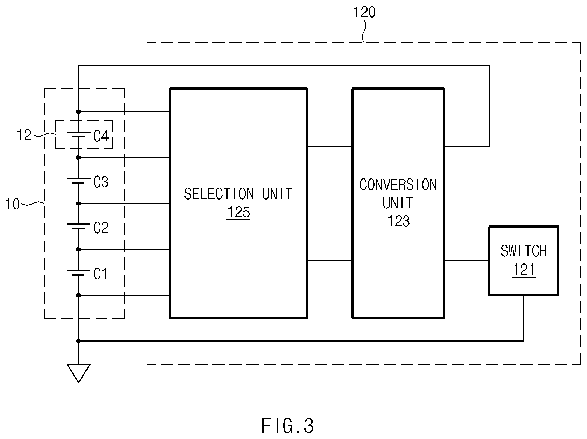

FIG. 2 is a block diagram illustrating a battery management device according to an embodiment disclosed in this document. FIG. 3 is a block diagram illustrating an operation of the battery management device according to an embodiment disclosed in this document.

First, referring to FIG. 2, the battery management device 100 may be various electronic devices for managing, diagnosing, and testing a battery. According to an embodiment, the battery management device 100 may be included in one of the battery management system (BMS) inside a battery pack, a battery management server, a computer, and a cloud server. According to another embodiment, the battery management device 100 may be included in a device for a charge and discharge test, such as a charge and discharge cycler.

According to the embodiment, the battery management device 100 may include an acquisition unit 110, a cell balancing unit 120, and a controller 130. Here, the cell balancing unit 120 may include at least one of a switch 121, a conversion unit 123, and a selection unit 125. However, the present invention is not limited thereto, and some configurations may be omitted from the battery management device 100, and other general-purpose configurations may be further included in the battery management device 100.

Referring to FIG. 3, the battery management device 100 may manage the battery unit 10. For example, the battery management device 100 may manage charging and discharging of the battery unit 10. In addition, the battery management device 100 may manage and control cell balancing for the battery cells 12 included in the battery unit 10.

According to various embodiments, battery cells C1, C2, C3, and C4 included in the battery unit 10 may deteriorate and degrade for reasons of production or use. These various causes may cause voltage deviation between the battery cells C1, C2, C3, and C4 during charging and discharging, and the voltage deviation may cause overdischarge or overcharge of a specific battery cell 12. Therefore, there may be a problem that the life of the battery cell 12 may be reduced and the energy efficiency of the battery unit 10 may be reduced.

In order to solve this problem, the battery management device 100 may perform cell balancing including active balancing and/or passive balancing. According to the embodiment, the battery management device 100 may determine a balancing target cell, and determine a cell balancing mode based on the balancing target cell to perform cell balancing. Here, the balancing target cell may mean the battery cell 12, which is a target of cell balancing, of the battery unit 10. In addition, the cell balancing mode may include an active balancing mode and a passive balancing mode.

According to the embodiment, the acquisition unit 110 (not illustrated) may acquire state information of the battery unit 10. Here, the state information may include voltage, current, temperature, etc. According to the embodiment, the acquisition unit 110 may acquire state information of each of the plurality of battery cells C1, C2, C3, and C4 included in the battery unit 10. For example, the acquisition unit 110 may acquire the voltage of each of the plurality of battery cells C1, C2, C3, and C4. According to the embodiment, the acquisition unit 110 may acquire information acquired by the sensor unit 14 of FIG. 1.

According to the embodiment, the battery management device 100 may include the cell balancing unit 120. Here, the cell balancing unit 120 may mean a hybrid type cell balancing circuit that may selectively perform active balancing and passive balancing. Through this, the battery management device 100 may have a higher degree of integration and efficiency than a cell balancing circuit including a circuit for active balancing and a separate circuit for passive balancing.

According to the embodiment, the battery management device 100 may perform active balancing by controlling the cell balancing unit 120 to charge the balancing target cell using output power of the battery unit 10. Through this, the battery management device 100 has an advantageous effect of being able to perform active balancing using power of the battery unit 10 (e.g., the battery module, the battery bank, or the battery pack) rather than external power or power of one battery cell 12.

In addition, according to the embodiment, the battery management device 100 may perform passive balancing by controlling the cell balancing unit 120 to discharge power of the balancing target cell through a resistor (e.g., a balancing resistor). In another aspect, the cell balancing unit 120 may include a resistor for passive balancing in the circuit for active balancing. Through this, the battery management device 100 has an advantageous effect of being able to selectively perform active balancing and passive balancing by controlling one cell balancing unit 120. In addition, the cell balancing unit 120 may have a high degree of integration.

According to the embodiment, the cell balancing unit 120 of the battery management device 100 may further include the switch 121, the conversion unit 123, and/or the selection unit 125 to transfer the output power of the battery unit 10 to the balancing target cell. For example, the battery management device 100 may determine the cell balancing mode and the balancing target cell based on the state information acquired by the acquisition unit 110. Also, the battery management device 100 may control an operation of at least one of the switch 121, the conversion unit 123, and the selection unit 125 based on the determined cell balancing mode and the balancing target cell, and manage the battery unit 10. Here, the operation of the battery management device 100 may be performed by the controller 130.

According to the embodiment, the controller 130 may control the operations of the battery management device 100. The controller 130 may control the operation of the cell balancing unit 120 based on the voltage acquired by the acquisition unit 110. Through this, the controller 130 may control charging and/or discharging operations of each of the plurality of battery cells C1, C2, C3, and C4.

According to the embodiment, the controller 130 may determine the balancing target cell and the cell balancing mode based on the voltage of each of the plurality of battery cells C1, C2, C3, and C4 included in the battery unit 10. Here, the balancing target cell may mean the battery cell 12, which is a cell balancing target, of the battery unit 10. In addition, the cell balancing mode may include an active balancing mode and a passive balancing mode. Also, the controller 130 may control the cell balancing unit 120 based on the determined balancing target cell and cell balancing mode.

According to the embodiment, the controller 130 may determine the balancing target cell and the cell balancing mode based on a voltage deviation of each of the plurality of battery cells C1, C2, C3, and C4. For example, the controller 130 may determine a battery cell (e.g., C4) having the largest voltage deviation compared to an average voltage of the plurality of battery cells C1, C2, C3, and C4 as the balancing target cell, but is not limited thereto.

According to the embodiment, the controller 130 may determine the cell balancing mode by comparing a voltage of the determined balancing target cell C4 with an average voltage of the remaining battery cells C1, C2, and C3. According to the embodiment, the controller 130 may perform active balancing on the balancing target cell C4 when the voltage of the determined balancing target cell C4 is lower than the average voltage of the remaining battery cells C1, C2, and C3. In addition, the controller 130 may perform passive balancing on the balancing target cell C4 when the voltage of the determined balancing target cell C4 is higher than the average voltage of the remaining battery cells C1, C2, and C3.

For example, the battery unit 10 may include four battery cells 12 C1, C2, C3, and C4, among which the battery cells C1, C2, and C3 may have a relatively high voltage, and one battery cell C4 may have a relatively low voltage. In this case, the controller 130 may determine the battery cell C4 having the largest voltage deviation (i.e., the battery cell having the lowest voltage) compared to the average voltage of the plurality of battery cells C1, C2, C3, and C4 as the balancing target cell. Also, when the controller 130 determines the battery cell C4 having a low voltage as the balancing target cell, the controller 130 may determine the cell balancing mode as the active balancing mode. If the controller 130 performs passive balancing on the battery cells C1, C2, and C3 having a high voltage, the power of the battery cells C1, C2, and C3 may be wasted, which may cause the power of the battery unit 10 to be wasted. Therefore, the controller 130 may reduce energy waste and quickly reduce a voltage difference between the battery cell C4 and the battery cells C1, C2 and C3 by charging the battery cell C4 having low voltage through the power of the battery unit 10.

In contrast, the battery cells C1, C2, and C3 of the battery unit 10 may have a relatively low voltage, and one battery cell C4 may have a relatively high voltage. In this case, the controller 130 may determine the battery cell (i.e., the battery cell having the highest voltage) C4 having the largest voltage deviation compared to the average voltage of the plurality of battery cells C1, C2, C3, and C4 as the balancing target cell. In addition, when the controller 130 determines the battery cell C4 having the high voltage as the balancing target cell, the controller 130 may determine the cell balancing mode as the passive balancing mode. If the controller 130 performs active balancing on the battery cells C1, C2, and C3 having low voltage using the power of the battery cell C4 having high voltage, the charging efficiency may be reduced. Therefore, the controller 130 may reduce the voltage deviation between the battery cell C4 and the battery cells C1, C2, and C3 by dissipating only the power of the battery cell C4 having the high voltage through the resistor.

According to the embodiment, the controller 130 may manage the balancing target cell based on the determined cell balancing mode. For example, the controller 130 may perform active balancing on the balancing target cell in an active balancing mode or perform passive balancing on the balancing target cell in a passive balancing mode.

According to the embodiment, the controller 130 may perform the cell balancing using balancing power or power of the balancing target cell based on the determined cell balancing mode. Here, the controller 130 may control the cell balancing unit 120 to charge or discharge the balancing target cell. For example, the controller 130 may control the operation of the switch 121 and the selection unit 125 to charge or discharge the balancing target cell.

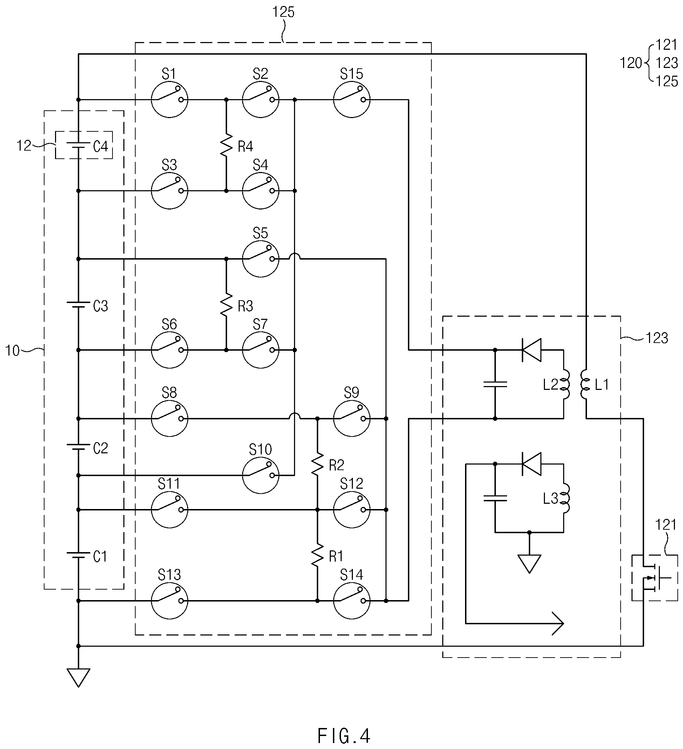

FIG. 4 is a circuit diagram illustrating the operation of the battery management device according to an embodiment disclosed in this document.

Referring to FIG. 4, the battery management device 100 may include the cell balancing unit 120 to manage the battery unit 10. Here, the cell balancing unit 120 may perform active balancing and/or passive balancing on the balancing target cell (e.g., the battery cell 12)) under the control of the controller 130.

According to the embodiment, the cell balancing unit 120 may include at least one of the switch 121, the conversion unit 123, and the selection unit 125. However, the present invention is not limited thereto, and some configurations may be omitted from the cell balancing unit 120, and other general-purpose configurations may be further included in the cell balancing unit 120.

According to the embodiment, the switch 121 may be connected to the battery unit 10. For example, the switch 121 may be connected to one end and/or both ends of the battery unit 10. Through this, the switch 121 may switch power of the battery unit 10 generated from the battery unit 10.

According to the embodiment, the switch 121 may be disposed between the battery unit 10 and the conversion unit 123. For example, the current generated from the battery unit 10 may be provided to the conversion unit 123 through the switch 121. Here, a current of the battery unit 10 flowing through the switch 121 may be a direct current (DC) current.

According to the embodiment, the current of the battery unit 10 may be changed into a current in a form that may be applied to the conversion unit 123 through the operation of the switch 121. Here, the current in the form that may be applied to the conversion unit 123 may vary depending on the type of the conversion unit 123. For example, when the conversion unit 123 includes a DC-DC converter, the current in the form that may be applied to the conversion unit 123 may be DC. In addition, when the conversion unit 123 includes a transformer, the current in the form that may be applied to the conversion unit 123 may be a square wave or an alternating current (AC) current.

According to the embodiment, the switch 121 may be turned on or off in response to a control signal. Here, the control signal may mean a signal that controls a turn-on or turn-off operation of the switch 121 and may be controlled by the controller 130. According to the embodiment, the controller 130 (see FIG. 2) may apply the control signal to the switch 121. For example, the control signal may include a PWM signal. In another aspect, the controller 130 may control the turn-on or turn-off operation of the switch 121 through the PWM signal. Accordingly, the switch 121 may be turned on when the PWM signal is in a logic high state, and the switch 121 may be turned off when the PWM signal is in a logic low state. The output current of the battery unit 10 may be changed into a form that can be applied to the conversion unit 123 by the current transmitted by the PWM signal. For example, the DC current generated in the battery unit 10 may be changed into a square wave current through the operation of the switch 121.

According to the embodiment, the switch 121 may include a transistor. For example, the switch 121 may be implemented with various transistors such as a field effect transistor (FET or MOSFET) or a bipolar transistor. Here, the transistor may be an n-type or p-type transistor. According to the embodiment, the switch 121 may include an n-MOSFET.

According to the embodiment, the cell balancing unit 120 may include the conversion unit 123. According to the embodiment, the conversion unit 123 may be connected to the switch 121. For example, the conversion unit 123 may be disposed between the battery unit 10 and the switch 121. Therefore, the DC current generated in the battery unit 10 may be converted into a square wave form through the switch 121 and transmitted to the conversion unit 123.

According to the embodiment, the conversion unit 123 may convert power of the battery unit 10. For example, the conversion unit 123 may convert the power of the battery unit 10 into power transmitted to one or more battery cells 12 or one or more loads. According to the embodiment, the conversion unit 123 may convert DC power into DC power, convert DC power into AC power, or convert voltage.

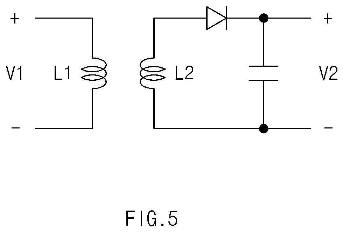

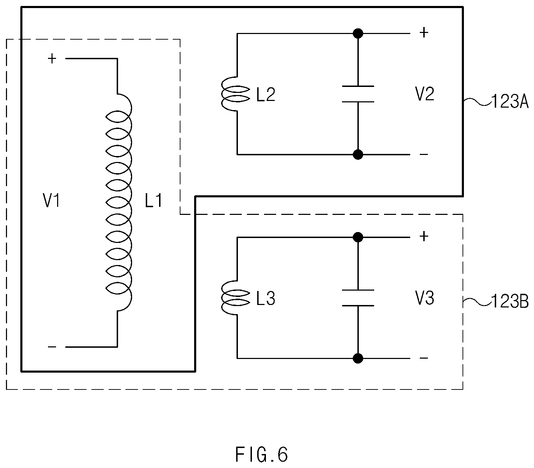

According to the embodiment, the conversion unit 123 may convert the power of the battery unit 10 when the switch 121 is turned on or off. In another aspect, the conversion unit 123 may convert the power of the battery unit 10 based on the current of the battery unit 10 when the switch 121 is turned on. According to the embodiment, the switch 121 and the conversion unit 123 may be understood as a configuration corresponding to a flyback converter in one aspect. Here, the flyback converter may mean an insulated DC-DC converter that converts voltage through a switch. The conversion unit 123 may be described in detail with reference to FIGS. 5 and 6.

FIG. 5 and FIG. 6 are circuit diagrams illustrating a conversion unit according to an embodiment disclosed in the present document.

First, referring to FIG. 5, the conversion unit 123 may include a transformer. Here, the transformer may include two magnetically coupled inductors L1 and L2. For example, the conversion unit 123 may include a primary winding L1 and a secondary winding L2. In addition, the primary winding L1 and the secondary winding L2 may be insulated from each other. According to the embodiment, a primary side of the transformer may include the primary winding L1, and a secondary side of the transformer may include the secondary winding L2, a diode, and a capacitor.

According to the embodiment, the conversion unit 123 may convert an input voltage V1 into an output voltage V2 based on a turn ratio between the primary winding L1 and the secondary winding L2. For example, if the turn ratio is 2:1, the output voltage V2 may be half of the input voltage V1.

According to the embodiment, the conversion unit 123 may step down the voltage of the battery unit 10. In this case, the converted output voltage may be lower than the voltage of the battery unit 10, which is an input voltage.

According to the embodiment, the conversion unit 123 may convert the power of the battery unit 10 into balancing power. Here, the balancing power may mean power used for active balancing. For example, the balancing power may mean the power consumed to perform active balancing on one battery cell 12.

According to the embodiment, the output voltage V2 of the conversion unit 123 may be the same as the voltage of the balancing target cell. In another aspect, the voltage V2 of the balancing power of the conversion unit 123 may be the same as the voltage of one battery cell 12. For example, a rated voltage for charging the battery cell 12 may be 3 V or more and 4.2 V or less. Therefore, the turn ratio of the conversion unit 123 may be the same as the voltage of the battery unit 10 to the voltage of the battery cell 12.

Referring to FIG. 6, the conversion unit may convert an input voltage (or power) into two or more output voltages (or power). According to the embodiment, a plurality of conversion units 123 may be provided. For example, the conversion unit 123 may include a first conversion unit 123A and a second conversion unit 123B. Here, the first conversion unit 123A may refer to a part that converts an input voltage V1 into an output voltage V2, and the second conversion unit 123B may refer to a part that converts the input voltage V1 into an output voltage V3. FIG. 5 illustrates two conversion units 123, but is not limited thereto, and the conversion unit 123 may include n conversion units 123 (n is a natural number greater than or equal to 2).

According to the embodiment, the primary side of the first conversion unit 123A and the secondary side of the first conversion unit 123A may be in an insulated state, and the primary side of the second conversion unit 123B and the secondary side of the second conversion unit 123B may be in an insulated state.

According to the embodiment, the first conversion unit 123A may convert the power of the battery unit 10 into balancing power. Here, the balancing power may mean power used for active balancing of the battery cell 12.

According to the embodiment, the second conversion unit 123B may convert the power of the battery unit 10 into reserve power. Here, the reserve power may mean power provided to a load (or electronic device). For example, the load (or the electronic device) may include a battery management system (BMS), an electrical component within a vehicle, or a driving component within a vehicle.

According to the embodiment, since the primary side of the second conversion unit 123B and the secondary side of the second conversion unit 123B are in an insulated state, the battery unit 10 connected to the primary side and the load (or electronic device) connected to the secondary side may be insulated. In another aspect, the reserve power may be supplied to the electronic device insulated from the battery unit 10. Through this, the conversion unit 123 may replace the power provided to the load (or electronic device) by using the power of the battery unit 10.

According to the embodiment, the first conversion unit 123A and the second conversion unit 123B may step down the voltage of the battery unit 10. In this case, the converted output voltage may be lower than the voltage of the battery unit 10, which is the input voltage. In another aspect, each of the balancing power and the reserve power may be lower than the power of the battery unit 10.

According to the embodiment, the output voltage V2 of the first conversion unit 123A and the output voltage V3 of the second conversion unit 123B may be different. For example, the output voltage V2 that generates the balancing power may be the same as the voltage of the battery cell 12, and the output voltage V3 that generates the reserve power may be the same as the voltage of the load (or electronic device). Through this, the conversion unit 123 may improve the degree of integration of the conversion unit 123 by converting the power of a single battery unit 10 into a plurality of powers. In addition, the conversion unit 123 may convert the voltage of the battery unit 10 into a voltage corresponding to the voltage of each of the load and battery cell 12 connected to the secondary side, thereby reducing wasted power during power conversion and efficiently converting power.

According to the embodiment, the turn ratio of each of the first conversion unit 123A and the second conversion unit 123B may vary depending on the device connected to each of the first conversion unit 123A and the second conversion unit 123B. For example, the turn ratio of the first conversion unit 123A may be determined according to the voltage of the battery cell 12 connected to the secondary side of the first conversion unit 123A. In addition, the turn ratio of the second conversion unit 123B may be determined according to the specifications of the load (or electronic device) connected to the secondary side of the second conversion unit 123B. For example, when an electronic device connected to the second conversion unit 123B is a BMS, the turn ratio of the second conversion unit 123B may be equal to a ratio of the voltage of the battery unit 10 to the rated voltage of the BMS. Therefore, the plurality of conversion units 123 may each have a different turn ratio to supply power that meets the specifications of the load.

According to the embodiment, the first conversion unit 123A may include a primary winding L1 supplied with power of the battery unit 10 and a first secondary winding L2 magnetized with the primary winding.

According to the embodiment, the second conversion unit 123B may include the primary winding L1 supplied with power of the battery unit 10 and a second secondary winding L3 magnetized with the primary winding.

According to the embodiment, the primary side of the first conversion unit 123A and the primary side of the second conversion unit 123B may be the same. In another aspect, the primary side of the first conversion unit 123A and the primary side of the second conversion unit 123B may include the same primary winding L1. Therefore, the conversion unit 123 may simultaneously convert the power of the battery unit 10 into balancing power and reserve power.

According to the embodiment, the second secondary winding of the second conversion unit 123B may be connected to an electronic device insulated from the battery unit 10. Through this, the conversion unit 123 may supply the power of the battery unit 10 to another load or electronic device. In addition, the conversion unit 123 may replace a power circuit provided to the other load or electronic device. Therefore, the conversion unit 123 including the first conversion unit 123A and the second conversion unit 123B may improve the degree of integration of the circuit.

Referring again to FIG. 4, the cell balancing unit 120 may include the selection unit 125. According to the embodiment, the controller 130 may control the selection unit 125 based on the cell balancing mode and the balancing target cell to manage the balancing target cell.

According to the embodiment, the selection unit 125 may be connected to the conversion unit 123. For example, the selection unit 125 may be disposed between the conversion unit 123 and the battery unit 10. According to the embodiment, the DC current converted by the conversion unit 123 may be transferred to the battery cell 12 according to the operation of the selection unit 125.

According to the embodiment, the selection unit 125 may make conductive or cut off the electrical connection related to the balancing target cell based on the cell balancing mode and the balancing target cell determined by the controller 130. For example, when the cell balancing mode is determined as an active balancing mode, the controller 130 may control the selection unit 125 so that the balancing power among the power converted by the conversion unit 123 is applied to the balancing target cell. In addition, when the cell balancing mode is determined as a passive balancing mode, the controller 130 may control the selection unit 125 so that the balancing target cell is connected to the balancing resistor.

According to the embodiment, the selection unit 125 may switch between the active balancing and the passive balancing. In another aspect, the controller 130 may control the selection unit 125 to switch the active balancing mode to the passive balancing mode, or the passive balancing mode to the active balancing mode. Here, the selection unit 125 may include one or more switches for selecting a balancing target cell and a cell balancing mode.

According to the embodiment, the controller 130 may control the selection unit 125 to make conductive or cut off the electrical connection between each of the plurality of battery cells C1, C2, C3, and C4 and the balancing resistor. Through this, the controller 130 may switch the balancing target cell that is the target of passive balancing. In addition, the controller 130 may control the selection unit 125 to make conductive or cut off the electrical connection between each of the plurality of battery cells C1, C2, C3, and C4 and the conversion unit 123. Through this, the controller 130 may switch the balancing target cell that is the target of active balancing.

According to the embodiment, the selection unit 125 may include a plurality of passive resistors R1, R2, R3, and R4 and a plurality of passive switches S1, S3, S6, S8, S11, and S13 for passive balancing. Here, each of the plurality of passive resistors R1, R2, R3, and R4 may be connected in parallel to each of the plurality of battery cells C1, C2, C3, and C4. In addition, the plurality of passive switches S1, S3, S6, S8, S11, and S13 may switch respective electrical connections between the plurality of passive resistors R1, R2, R3, and R4 and the plurality of battery cells C1, C2, C3, and C4.

According to the embodiment, the plurality of passive switches S1, S3, S6, S8, S11, and S13 may be disposed between one end of each of the plurality of battery cells C1, C2, C3, and C4 and one ends the plurality of passive resistors R1, R2, R3, and R4. Here, the plurality of passive switches S1, S3, S6, S8, S11, and S13 illustrated in FIG. 4 are exemplary, and the plurality of passive switches are not limited thereto and may be disposed at other locations.

According to the embodiment, the selection unit 125 may include a plurality of active switches S1 to S15 for active balancing. Here, the plurality of active switches S1 to S15 may be connected between each of the plurality of battery cells C1, C2, C3, and C4 and the conversion unit 123. Therefore, the plurality of active switches S1 to S15 may switch the application of balancing power to each of the plurality of battery cells C1, C2, C3, and C4. According to the embodiment, some S1, S3, S6, S8, S11, and S13 of the active switches S1 to S15 may be configured as the same switches as the passive switches S1, S3, S6, S8, S11, and S13.

The selection unit 125 illustrated in FIG. 4 is exemplary, and the configuration of the selection unit 125 is not limited thereto, and the plurality of passive resistors, the plurality of passive switches, and the plurality of active switches may be replaced with other configurations. According to the embodiment, the plurality of passive switches and the plurality of active switches may include at least one relay, a magnetic contactor, and/or a transistor.

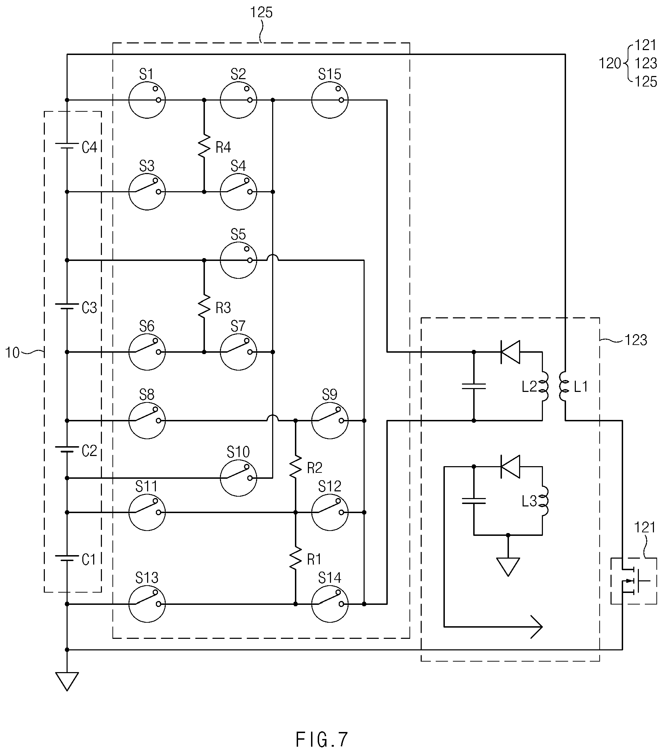

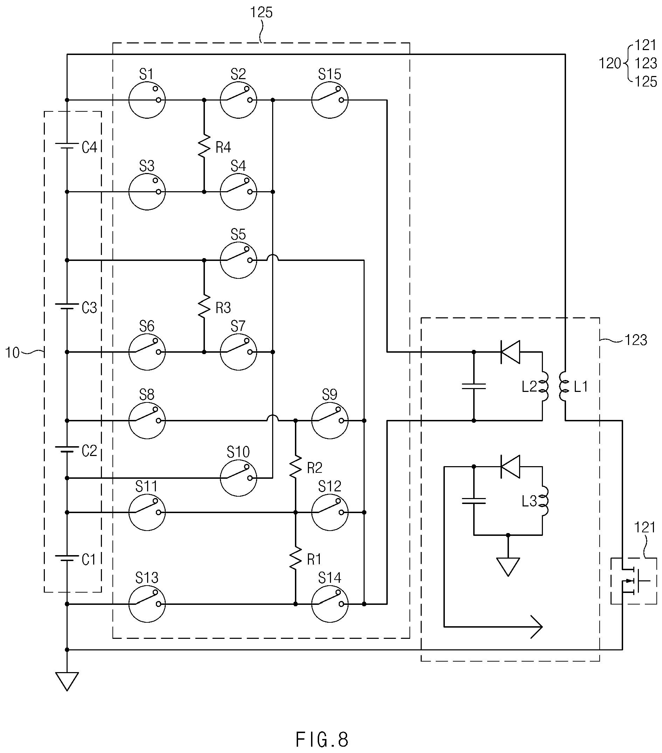

FIG. 7 is a circuit diagram illustrating an operation of a cell balancing unit in an active balancing mode according to an embodiment disclosed in this document, and FIG. 8 is a circuit diagram illustrating the operation of the cell balancing unit in a passive balancing mode according to an embodiment disclosed in this document.

Referring to FIG. 7, when the cell balancing mode is determined to be the active balancing mode, the controller 130 may control the selection unit 125 to perform active balancing on the balancing target cell (e.g., C4). For example, the controller 130 may control the selection unit 125 to charge the balancing target cell C4 using the balancing power.

According to the embodiment, the controller 130 may short-circuit the active switches S1, S2, S5, and S15 connected between the balancing target cell C4 and the conversion unit 123 among the plurality of active switches S1 to S15. In addition, the controller 130 may open the remaining active switches and passive switches except for the short-circuited active switches S1, S2, S5, and S15 among the active switches and passive switches included in the selection unit 125. Through this, the controller 130 may charge the balancing target cell C4 through the balancing power.

According to the embodiment, the controller 130 may perform active balancing until the voltage of the balancing target cell C4 of the battery units 10 becomes equal to an average voltage of the remaining battery cells C1, C2, and C3. Through this, the controller 130 may efficiently balance voltage deviations of the multiple battery cells C1, C2, C3, and C4 included in the battery unit 10.

Referring to FIG. 8, when the cell balancing mode is determined to be a passive balancing mode, the controller 130 may control the selection unit 125 to perform passive balancing on the balancing target cell (e.g., C4). For example, the controller 130 may control the selection unit 125 to allow the power of the balancing target cell C4 of the passive resistor R4 to be discharged.

According to the embodiment, the controller 130 may short-circuit the passive switches S1 and S3, which are connected between the balancing target cell C4 and the passive resistor R4, among the plurality of passive switches S1, S3, S6, S8, S11, and S13. In addition, the controller 130 may open the remaining active switches and passive switches except for the short-circuited passive switches S1 and S3 among the active switches and passive switches included in the selection unit 125. Through this, the controller 130 may discharge the power of the balancing target cell C4 through the passive resistor R4.

According to the embodiment, the controller 130 may perform passive balancing until the voltage of the balancing target cell C4 of the battery units 10 becomes equal to the average voltage of the remaining battery cells C1, C2, and C3. Through this, the controller 130 may efficiently balance the voltage deviations of the plurality of battery cells C1, C2, C3, and C4 included in the battery unit 10.

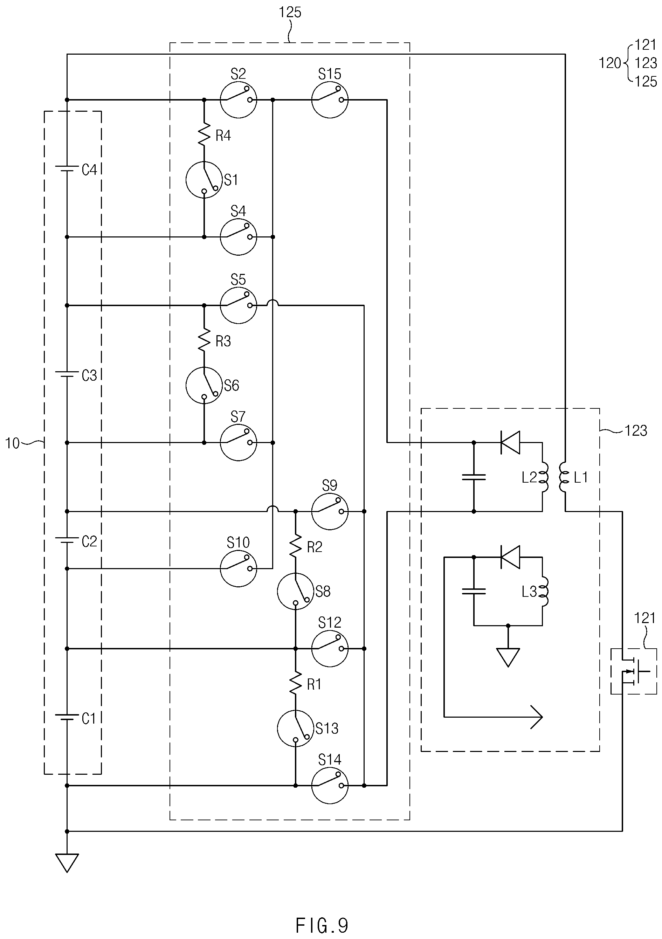

FIG. 9 is a circuit diagram illustrating a selection unit according to an embodiment disclosed in the present document.

Referring to FIG. 9, the plurality of passive switches S1, S6, S8, and S13 may be disposed at different positions from the plurality of passive switches S1, S3, S6, S8, S11, and S13 illustrated in FIGS. 4, 7, and 8. Here, the plurality of passive switches S1, S6, S8, and S13 may switch electrical connections between the plurality of passive resistors R1, R2, R3, and R4 and the plurality of battery cells C1, C2, C3, and C4, respectively.

According to the embodiment, each of the plurality of passive switches S1, S6, S8, and S13 may be connected in series with each of the plurality of passive resistors R1, R2, R3, and R4. Therefore, the plurality of passive switches S1, S6, S8, and S13 may switch currents flowing through the plurality of passive resistors R1, R2, R3, and R4. Through this, the controller 130 may control a smaller number of the passive switches S1, S6, S8, and S13 than the plurality of passive switches S1, S3, S6, S8, S11, and S13 illustrated in FIG. 4 to switch the passive balancing mode and the balancing target cells.

According to the embodiment, the selection unit 125 may include a plurality of active switches S2, S4, S5, S7, S9, S10, S12, S14, and S15 for active balancing. Here, the plurality of active switches S2, S4, S5, S7, S9, S10, S12, S14, and S15 may be connected between each of the plurality of battery cells C1, C2, C3, and C4 and the conversion unit 123. Therefore, the plurality of active switches S2, S4, S5, S7, S9, S10, S12, S14, and S15 may switch whether to apply balancing power to each of the plurality of battery cells C1, C2, C3, and C4. Through this, the controller 130 may control a smaller number of the plurality of active switches S2, S4, S5, S7, S9, S10, S12, S14, and S15 than the plurality of active switches S1 to S15 illustrated in FIG. 4 to switch the active balancing mode and the balancing target cells.

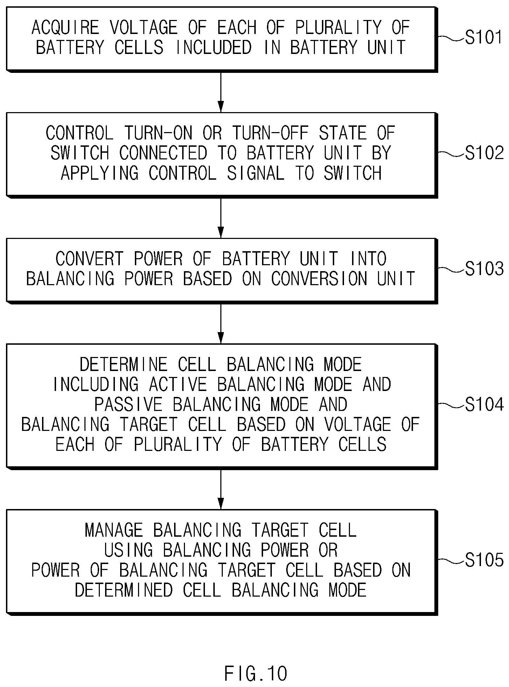

FIG. 10 is a flowchart illustrating operations of a battery management device according to an embodiment disclosed in this document.

The operations illustrated in FIG. 10 may be performed through the battery management device 100 of FIG. 2. Respective operations in the following embodiment may be performed sequentially, but are not necessarily performed sequentially. For example, the order of the operations may be changed, and at least two operations may be performed in parallel. In addition, at least one of the operations below may be omitted depending on the embodiment.

Referring to FIG. 10, the battery management device 100 acquires the voltage of each of the plurality of battery cells included in the battery unit (S101), controls a turn-on or turn-off state of a switch connected to the battery unit by applying a control signal to the switch (S102), converts power of the battery unit into balancing power through a conversion unit (S103), determines a cell balancing mode including an active balancing mode and a passive balancing mode and a balancing target cell based on the voltage of each of the plurality of battery cells (S104), and manage the balancing target cell using the balancing power or the power of the balancing target cell based on the determined cell balancing mode (S105).

In operation S101, the acquisition unit 110 of the battery management device 100 may acquire the voltage of each of the plurality of battery cells C1, C2, C3, and C4 included in the battery unit 10 (S101).

In operation S102, the controller 130 of the battery management device 100 may control the turn-on or turn-off state of the switch 121 connected to the battery unit 10 by applying the control signal to the switch 121 (S102). Here, the controller 130 may control the switch 121 through a PWM signal.

In operation S103, the battery management device 100 may convert the power of the battery unit 10 into balancing power through the conversion unit 123 (S103). According to the embodiment, the battery management device 100 may convert the power of the battery unit into the balancing power in the first conversion unit 123A. Here, the balancing power may be smaller than the power of the battery unit. According to the embodiment, the battery management device 100 may convert the power of the battery unit into reserve power in the second conversion unit 123B. Here, the reserve power may be smaller than the power of the battery unit. According to the embodiment, the battery management device 100 may simultaneously convert the power of the battery unit into the balancing power and the reserve power.

In operation S104, the controller 130 of the battery management device 100 may determine a cell balancing mode including an active balancing mode and a passive balancing mode and a balancing target cell based on the voltage of each of the plurality of battery cells C1, C2, C3, and C4 (S104).

In operation S105, the controller 130 of the battery management device 100 may manage the balancing target cell using the balancing power or the power of the balancing target cell based on the determined cell balancing mode (S105). For example, when the cell balancing mode is determined to be the active balancing mode, the controller 130 may short-circuit an active switch, which is connected between the balancing target cell and the conversion unit, among the plurality of active switches. In addition, when the cell balancing mode is determined to be the passive balancing mode, the controller 130 may short-circuit a passive switch, which is connected between the balancing target cell and the passive resistor, among the plurality of passive switches.

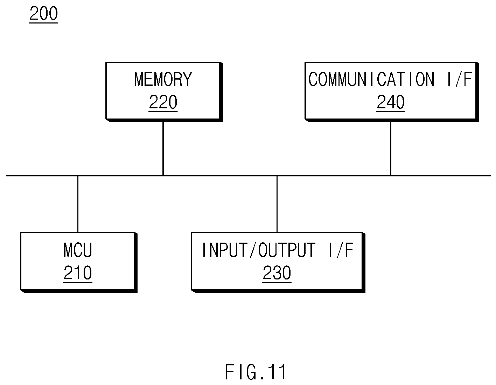

FIG. 11 is a block diagram illustrating a hardware configuration of a computing system for performing an operating method of the battery management device according to an embodiment disclosed in this document.

Referring to FIG. 11, a computing system 200 according to an embodiment disclosed in this document may include an MCU 210, a memory 220, an input/output I/F 230, and a communication I/F 240.

The MCU 210 may be a processor that executes various programs (e.g., battery data collection programs, data analysis programs, and data processing programs, etc.) stored in the memory 220, processes various information including battery data through these programs, and performs functions of the battery management device 100 illustrated in FIGS. 1 to 10 described above.

The memory 220 may store various programs such as battery data collection programs, data analysis programs, and data processing programs.

A plurality of such memories 220 may be provided as needed. The memory 220 may be a volatile memory or a nonvolatile memory. The memory 220 as the volatile memory may be RAM, DRAM, SRAM, etc. The memory 220 as the nonvolatile memory may be ROM, PROM, EAROM, EPROM, EEPROM, flash memory, etc. The examples of the memories 220 listed above are only examples and the memories 220 are not limited to these examples.

As the input/output I/F 230, there may be provided an interface that connects an input device (not illustrated) such as a keyboard, mouse, or touch panel, an output device such as a display (not illustrated), and an MCU 210 to allow data to be transmitted and received therebetween.

The communication I/F 240 may be a configuration that can transmit and receive various data with a server, and may be various devices that can support wired or wireless communication. For example, the battery management device 100 can transmit and receive various types of information, including battery data, from a separately provided external server through the communication I/F 240.

In this way, the computer program according to an embodiment disclosed in this document may be implemented as a module that performs each function illustrated in FIG. 2 by being recorded in the memory 220 and processed by the MCU 210, for example.

In the above, even though all the components constituting the embodiment disclosed in this document have been described as being combined as one or operating in combination, the embodiments disclosed in this document are not necessarily limited to the embodiment. That is, within the scope of the objective of the embodiments disclosed in this document, all of the components may be operated by selectively combining one or more of them.

The terms "include," "configure," or "have" described above, unless specifically stated to the contrary, mean that the corresponding component may be included therein, and therefore should be interpreted as further including other components rather than excluding other components. All terms including technical or scientific terms have the same meaning as commonly understood by a person skilled in the art to which the embodiments disclosed in this document belong, unless otherwise defined. Terms commonly used, such as terms defined in the dictionary, should be interpreted as being consistent with the contextual meaning of the relevant technology, and should not be interpreted in an idealized or overly formal sense unless clearly defined in this document.

The above-mentioned disclosure outlines the features of some embodiments so that those skilled in the art may better understand the aspects of the present disclosure. Those skilled in the art will understand that the present disclosure may be easily used as a basis for designing or modifying other structures to perform the same purposes or achieve the same advantages of the embodiments introduced herein. Furthermore, those skilled in the art will recognize that such equivalent configuration do not depart from the scope of the present disclosure, and that various changes, substitutions, and modifications may be made herein without departing from the scope of the present disclosure.

### [Description of symbols]

1: battery pack
10: battery unit
12: battery cell
14: sensor unit
16: switching unit
20: battery management system
100: battery management device
110: acquisition unit
120: cell balancing unit
121: switch
123: conversion unit
123a: first conversion unit
123b: second conversion unit
125: selection unit
130: controller
200: computing system
210: MCU
220: memory
230: input/output I/F
240: communication I/F

## Claims

1. A battery management device comprising:
an acquisition unit that acquires a voltage of each of a plurality of battery cells included in a battery unit;
a switch connected to the battery unit and turned on or off in response to a control signal;
a conversion unit that converts power of the battery unit into balancing power; and
a controller that determines a cell balancing mode including an active balancing mode and a passive balancing mode and a balancing target cell based on the voltage of each of the plurality of battery cells, and manages the balancing target cell using the balancing power or power of the balancing target cell based on the determined cell balancing mode.

2. The battery management device of claim 1, wherein the control signal includes a PWM signal.

3. The battery management device of claim 1, wherein the conversion unit converts the power of the battery unit when the switch is turned on.

4. The battery management device of claim 1, wherein the conversion unit include:
a first conversion unit that converts the power of the battery unit into the balancing power; and
a second conversion unit that converts the power of the battery unit into reserve power.

5. The battery management device of claim 4, wherein each of the balancing power and the reserve power is smaller than the power of the battery unit.

6. The battery management device of claim 4, wherein the reserve power is supplied to an electronic device insulated from the battery unit.

7. The battery management device of claim 4, wherein the first conversion unit includes a primary winding L2 supplied with the power of the battery unit and a first secondary winding L1 magnetized with the primary winding, and
the second conversion unit includes the primary winding L2 and a second secondary winding L3 magnetized with the primary winding.

8. The battery management device of claim 7, wherein the second secondary winding of the second conversion unit is connected to an electronic device insulated from the battery unit.

9. The battery management device of claim 1, further comprising:
a selection unit that makes conductive or cuts off at least one of an electrical connection between each of the plurality of battery cells and a balancing resistor and an electrical connection between each of the plurality of battery cells and the conversion unit,
wherein the controller controls the selection unit based on the cell balancing mode and the balancing target cell to manage the balancing target cell.

10. The battery management device of claim 9, wherein the selection unit includes:
a plurality of passive resistors connected in parallel to each of the plurality of battery cells;
a plurality of passive switches switching an electrical connection between each of the plurality of passive resistors and each of the plurality of battery cells; and
a plurality of active switches connected between each of the plurality of battery cells and the conversion unit and switching application of the balancing power to each of the plurality of battery cells.

11. The battery management device of claim 10, wherein the controller, when the cell balancing mode is determined to be the active balancing mode, short-circuits an active switch connected between the balancing target cell and the conversion unit among the plurality of active switches, and opens remaining active switches and remaining passive switches except for the short-circuited active switch among the active switches and the passive switches.

12. The battery management device of claim 10, wherein the controller, when the cell balancing mode is determined to be the passive balancing mode, short-circuits a passive switch connected between the balancing target cell and the passive resistor among the plurality of passive switches and opens remaining active switches and remaining passive switches except for the short-circuited passive switch among the active switches and the passive switches.

13. A battery management device comprising:
acquiring a voltage of each of a plurality of battery cells included in a battery unit;
controlling a turn-on or turn-off state of the switch by applying a control signal to a switch connected to the battery unit;
converting power of the battery unit into balancing power through a conversion unit;
determining a cell balancing mode including an active balancing mode and a passive balancing mode and a balancing target cell based on the voltage of each of the plurality of battery cells; and
managing the balancing target cell using the balancing power or power of the balancing target cell based on the determined cell balancing mode.

14. The battery management method of claim 13, wherein the control signal includes a PWM signal.

15. The battery management method of claim 13, wherein, in the converting, the power of the battery unit is converted when the switch is turned on.

16. The battery management method of claim 13, wherein the conversion unit includes a first conversion unit and a second conversion unit, and
the converting includes:
converting the power of the battery unit into the balancing power by the first conversion unit; and
converting the power of the battery unit into reserve power by the second conversion unit.

17. The battery management method of claim 16, wherein each of the balancing power and the reserve power is smaller than the power of the battery unit.

18. The battery management method of claim 16, further comprising: after the converting, supplying the reserve power to an electronic device insulated from the battery unit.

19. The battery management method of claim 16, wherein the first conversion unit includes a primary winding L2 supplied with the power of the battery unit and a first secondary winding L1 magnetized with the primary winding, and
the second conversion unit includes the primary winding L2 and a second secondary winding L3 magnetized with the primary winding.

20. The battery management method of claim 16, wherein the power of the battery unit is simultaneously converted into the balancing power and the reserve power.

21. The battery management method of claim 13, wherein the managing of the balancing target cell includes controlling a selection unit that makes conductive or cuts off at least one of an electrical connection between each of the plurality of battery cells and a balancing resistor and an electrical connection between each of the plurality of battery cells and the conversion unit based on the cell balancing mode and the balancing target cell.

22. The battery management method of claim 21, wherein the selection unit includes:
a plurality of passive resistors connected in parallel to each of the plurality of battery cells;
a plurality of passive switches switching an electrical connection between each of the plurality of passive resistors and each of the plurality of battery cells; and
a plurality of active switches connected between each of the plurality of battery cells and the conversion unit and switching application of the balancing power to each of the plurality of battery cells.

23. The battery management method of claim 22, wherein
the controlling of the selection unit, when the cell balancing mode is determined to be the active balancing mode, includes:
short-circuiting an active switch connected between the balancing target cell and the conversion unit among the plurality of active switches; and
opening remaining active switches and remaining passive switches except for the short-circuited active switch among the active switches and the passive switches.

24. The battery management method of claim 22, wherein the controlling of the selection unit, when the cell balancing mode is determined to be the passive balancing mode, includes:
short-circuiting a passive switch connected between the balancing target cell and the passive resistor among the plurality of passive switches; and
opening remaining active switches and remaining passive switches except for the short-circuited passive switch among the active switches and the passive switches.
